# EUROPEAN PATENT APPLICATION

(11) **EP 0 927 878 A2**
(43) Date of publication of application: **07.07.1999**
(21) Application number: 98121427.3
(22) Date of filing: 11.11.1998
(51) Int. Cl.: G01L 19/12

(54) **Pressure indicator for bottles with compressed gases**

(30) Priority: 30.12.1997 IT GE970046 U
(71) Applicant: HTM SPORT S.p.A., I-16035 Rapallo (IT)
(72) Inventor: Garofalo, Giovanni, 16035 Rapallo (Genova) (IT)
(74) Representative: Porsia, Attilio, Dr.

(57) **Abstract**

Dynamometric manometer for bottles with compressed gases, composed of a piston (23) subject to the thrust of the bottle internal air and to the counterforce of a spring (24), the purpose being to vary the position of a cylindrical needle (25), attached onto the piston (23), within an element (19, 28) provided with a lateral opening and with means for pressure field detection. Said manometer is attached onto the bottle cocks upstream from the closing valve. The cylindrical needle (25) is provided with a groove (27) whose function is to directly connect the inside of the bottle with the outside when the inside pressure of the bottle exceeds a maximum safety value.

## Description

The present invention relates to a pressure gauging device for bottles with compressed gases, and in particular for bottles with compressed air for scuba divers.

When the scuba diver's equipment is fixed, it is possible to know the pressure and therefore he amount of air contained in a bottle with fairly good precision. The pressure can be detected by means of needle or electronic manometers allowing the evaluation of the diver's autonomy every minute during the diving. The aforesaid manometers are connected to the bottle together with the hoses, and are inserted downstream from the main bottle valve.

When a bottle is taken, from the storehouse for instance, it may be useful to know the amount of air it contains: if the air is not enough, one may choose another bottle or recharge the same one. Such situation is complicated by the fact that it is always necessary to attach a manometer and a closing device onto every bottle.

The present invention overcomes such drawback by placing a pressure gauge on every bottle cock upstream from the closing valve.

The manometer according to the present invention is based on the working of a mechanism similar to a dynamometer, that is, on the basis of the thrust exerted by the fluid in the bottle, a certain level of spring compression is obtained and, therefore, an indicator protrudes from the device. According to the indicator length protruding, it is possible to determine the pressure field within the bottle. Such gauging is not as precise as if it were carried out by means of a needle manometer, for instance, and can be considered as valid only when the bottle is externally subject to the atmospheric pressure. Nevertheless, it can be useful to establish at first sight whether the bottle is completely full, empty or partially full, without having to attach any instrument.

Moreover, the device according to the present invention can allow the exhaust of air in surplus when the bottle has been excessively charged.

The invention will be further described with reference to the enclosed drawings, where:
- Figure 1 is a partial view of a bottle equipped with the device according to the present invention;
- Figure 2 is a side view, partially sectioned, of a first form of embodiment of the device according to the present invention;
- Figure 3 is a side view of a detail of the embodiment shown in figure 2;
- Figure 4 is a side view, partially sectioned, of a second form of embodiment of the invention;
- Figure 5 is the view of a detail of the embodiment shown in figure 4.

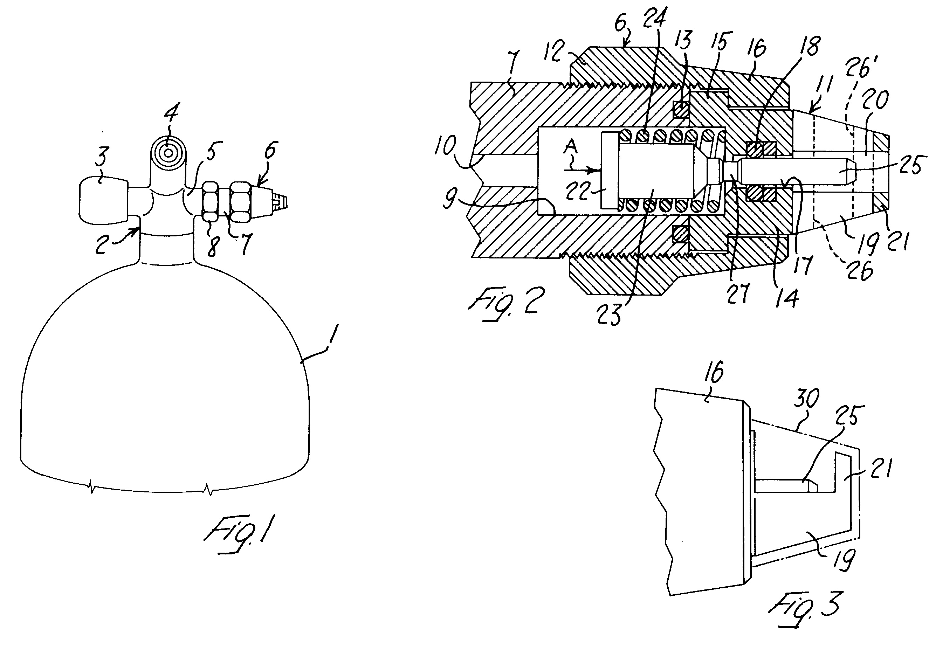

With reference to the drawings, and with first reference to figure 1, the numeral 1 indicates a bottle for compressed gas. On the neck of the bottle 1 a valve 2 is fixed (in the case shown it is a one-connection valve), said valve being equipped as usual with a closing valve with a control handwheel 3, and with a joint 4 for a utilising element, a supplying device for instance. On the cock body, moreover, a second connection 5 is provided, directly connected to the inside of the bottle, on said cock body the pressure gauging device 6 according to the invention being attached.

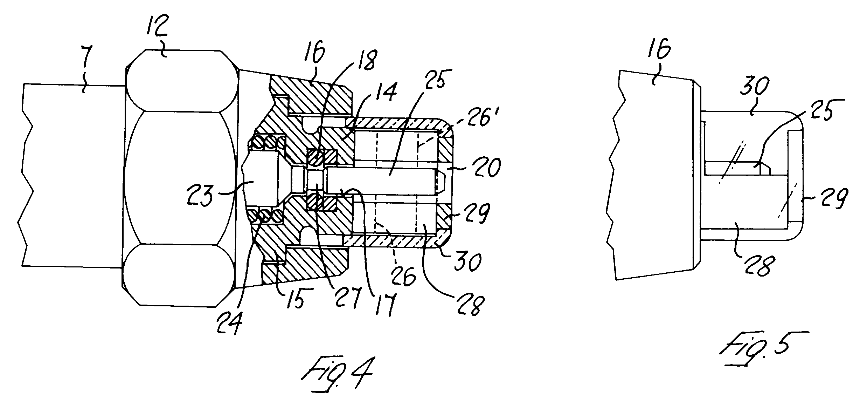

As further shown in figure 2, said device 6 is constituted by a tubular body 7 connected on one end to the connection 5 by means of a threaded bush 8. Said body 7 is internally made like a cylindrical chamber 9 connected on one end by means of a tubular pipe 10, with a smaller diameter, to the connection 5, and therefore to the inside of the bottle 1. On the other end, the chamber 9 is closed by means of a cap 11, fixed onto the tubular body 7 by means of a suitable threaded bush 12, with the insertion of a ring-shaped seal 13. The cap 11, in its turn, has a cylindrical body 14 with a ring-shaped greater part 15 onto which the flanged portion 16 of the bush 12 leans; said cap is also provided with an axial hole 17 with a housing for a sealing O ring 18. The cylindrical body 14 extends outside towards the bush 12, with a semicylindrical element 19 (in the case shown below in the shape of a cone frustum) provided with an axial semicylindrical groove 20 and closed on its end by means of a roofing part 21.

The semicylindrical element 19 is equipped with a series of notches 26, 26' marking off relative fields, whose purpose will be later illustrated.

The cylindrical chamber 9 houses, with radial clearance, a piston 22 provided with a rod 23, with a smaller diameter, around which a calibrated compression coil spring 24 is placed, whose position is between the bottom of the cylindrical body 14 of the cap 11 and the bottom of the piston 22.

The rod 23 is provided in its turn, on its free end, with a cylindrical needle 25 with a smaller diameter, extending through the hole 17 of the sealing body 14 beyond the sealing ring 18. Such cylindrical needle is provided on its base with a by-pass groove for the sealing ring 18, which can be in the form of a ring-shaped groove as in the case shown below, or with a groove extending in an axial direction along a correspondent tract of the skirt of the needle 25.

The device works as follows.

The air contained in the bottle exerts a thrust onto the bottom of the piston 22 in the direction shown by an arrow A. Such thrusting force is contrasted by the elastic force exerted by the spring 24. According to the balance position of the piston, the cylindrical needle 25 protrudes, more or less, within the body 19.

It is obvious that, if the cylindrical needle 25 reaches the top of the semicylindrical element 19, this means that the bottle is completely full; if, on the contrary, the cylindrical needle 25 is scarcely visible in the semicylindrical element 19, there isn't any air in the bottle. There are obviously intermediate positions indicating when the bottle is more or less empty or full.

In order to detect the field pressure within the bottle rapidly, after its calibration, some notches 26, 26' or areas with different colours are provided: when the cylindrical needle 25 is in one of these areas, the evaluation of the corresponding pressure can immediately take place.

Figure 4 shows a second form of embodiment of the device according to the present invention, with the same numbers indicating the same elements. In such embodiment the cylindrical body 14 protrudes outward the bush 12 with a semicylindrical element 28 (in the case shown below in a cylindrical shape),provided with an axial semicylindrical groove 20 and closed by a roofing part 29 which is also visible in Figure 5. In order to protect the device from sand, weeds or other particles coming in and possibly damaging its working, the semicylindrical element 28 is surmounted by a protection 30 in transparent plastic, introduced between the portion 16 and the cylindrical body 14 and attached onto the body 28. Said protective element can also be seen in figure 5.

The working of such form of embodiment is the same described above with reference to the previous embodiment.

Both forms of embodiment can be equipped with a charge overpressure exhaust. The exhaust is carried out by means of a by-pass of the sealing ring 18 when, during the filling phase of the bottle, the maximum pressure value allowed for the bottle is exceeded. Should such value be exceeded, the cylindrical needle 25 would be protruded, contrasting the action of the spring 24, in a position in which its groove 27 reaches and overtakes the sealing ring 18, as shown in figure 4. The exceeding air in the chamber 9 can exhaust outside, thus avoiding that, because of the overpressure, the bottle cocks are damaged or that a danger condition takes place.

For every lower pressure values the cylindrical needle 25 is placed in such a position that the groove 27 does not reach the sealing ring 18 (see figure 2), so that the air is prevented from leaking out.

If the overpressure exhaust is provided for, the protection 30 has holes so as to allow the air exhaust.

## Claims

1. Dynamometric manometer for bottles with compressed gases and in particular for scuba divers' bottles, characterised by the fact that it is composed of a piston (23) subject to the thrust of the bottle internal air and to the counterforce of a spring (24), thus varying the position of a cylindrical needle (25), attached onto the piston (23) within an element (19, 28).

2. Dynamometric manometer according to claim 1, characterised in that it is attached onto the bottle cocks upstream from the closing valve.

3. Dynamometric manometer according to claims 1 and 2, characterised in that the element (19, 28) is provided with a lateral opening and means for pressure field detection.

4. Dynamometric manometer according to claims 1 to 3, characterised in that the dynamometric manometer is protected by means of a transparent element (30) attached onto the manometer itself and to the element (28).

5. Dynamometric manometer according to the previous claims, characterised in that the cylindrical needle (25) is provided with a groove (27) in such a position and with such an extension to place itself, contrasting the elastic force of the spring (24), in such a position to overtake the sealing ring (18), thus directly connecting the inside of the bottle with the outside when and until the pressure within the bottle exceeds a maximum safety value.
